# EUROPÄISCHE PATENTANMELDUNG

(11) **EP 3 691 085 A1**
(43) Veröffentlichungstag der Anmeldung: **05.08.2020**
(21) Anmeldenummer: 19154227.3
(22) Anmeldetag: 29.01.2019
(51) Int. Cl.: H02K 1/14, H02K 1/18, F16B 5/02, H02K 7/18

(54) **FIXIERUNG VON STATORSEGMENTEN**

(71) Anmelder: Siemens Aktiengesellschaft, 80333 München (DE)
(72) Erfinder: Die Erfindernennung liegt noch nicht vor

(57) **Zusammenfassung**

Die Erfindung betrifft einen Stator (4) eines direktangetriebenen Windkraftgenerators mit in Umfangsrichtung betrachtet angeordneten Statorsegmenten (5), die jeweils insbesondere an zwei parallel verlaufend angeordneten Flanschen (8) eines gemeinsamen Statorträgers (6) positioniert sind, wobei jedes Statorsegment (5) über Fixationsvorrichtungen mit den Flanschen (8) fixiert ist, wobei die Fixationsvorrichtungen jeweils ein Zwischenstück (14), eine dazu passende Ausnehmung (11) am Segmentträger (7) des Statorsegments (5) und einen Passstift (13) aufweisen.

## Beschreibung

Die Erfindung betrifft einen Stator einer direkt angetriebenen Windkraftanlage als auch ein Verfahren zur Montage und Positionierung von Statorsegmenten einer derartigen Windkraftanlage.

Statoren von direkt angetriebenen Windkraftgeneratoren sind aufgrund ihres Durchmessers größer 4 Meter aus in Umfangsrichtung betrachtet mehreren Statorsegmenten zusammengesetzt. Dies sind in der Regel sechs, acht oder zwölf Statorsegmente, die zu einem Ring zusammengebaut werden. In der Regel wird das Statorsegment an beiden axialen Enden fixiert. Aufgrund der Größe des Stators ist es schwierig, die geforderten Toleranzen einzuhalten. Bei der Herstellung der Statorsegmente und der Statorträger ist eine genaue Fertigung notwendig. Flexible Einstellungen in ihrer, insbesondere radialen Position zueinander, sind nicht möglich. Damit hängt der finale Außendurchmesser von exakten Fertigungen der Statorträger als auch der Statorsegmente ab. Dies fordert einen hohen Fertigungsaufwand, was sehr kostenintensiv ist.

Ausgehend davon liegt der Erfindung die Aufgabe zugrunde, einen Stator bereitzustellen, der die oben genannten Nachteile vermeidet und bei dem, insbesondere der Luftspalt eines Windkraftgenerators einfach zu justieren ist.

Die Lösung der gestellten Aufgabe gelingt durch einen Stator eines direktangetriebenen Windkraftgenerators mit in Umfangsrichtung betrachtet angeordneten Statorsegmenten, die jeweils insbesondere an zwei parallel verlaufend angeordneten Flanschen eines gemeinsamen Statorträgers positioniert sind, wobei jedes Statorsegment über Fixationsvorrichtungen mit den Flanschen fixiert ist, wobei die Fixationsvorrichtungen jeweils ein Zwischenstück, eine dazu passende Ausnehmung am Segmentträger des Statorsegments und einen Passstift aufweisen.

Die Lösung der gestellten Aufgabe gelingt auch durch ein Verfahren zur Positionierung und Fixierung von Statorsegmenten eines Stators eines direkt angetriebenen Windkraftgenerators mittels mehrerer Fixationspunkte zur Erzielung eines gleichmäßigen Luftspalts zwischen dem Stator und einem Rotor durch folgende Schritte:
- Ansetzen eines Statorsegments an einen Statorträger mittels Montagevorrichtung,
- Justieren des Statorsegments am Statorträger mittels eines Zwischenstücks in eine Ausnehmung des Flanschträgers des Statorsegments, wobei Zwischenstück und Ausnehmung passgenau ausgeführt sind,
- Einsetzen eines Passstiftes in die Bohrung des Zwischenstücks und einer Öffnung im Flansch des Statorträgers, so dass durch Einsetzen des Passstiftes in die axial fluchtenden Bohrungen des Zwischenstücks und der Bohrung im Flansch eine radiale Positionierung und Fixierung des Statorelements am Flansch des Statorträgers erfolgt,
- wiederholen dieser Schritte an weiteren Fixationspunkten des Statorsegments bis die erforderliche Position eingenommen und fixiert wurde.

Um nunmehr, insbesondere die radiale Positionierung eines Statorsegments flexibel bzw. einfach einstellbar gestalten zu können, ist erfindungsgemäß nun eine Flexibilisierung bzw. Einstellbarkeit der zueinander axial verbindenden Ausnehmungen von Statorsegment und Statorträger, insbesondere während des Montagevorganges möglich. Vorteilhafterweise wird dabei jedes Statorsegment an den parallelen Flanschen des Statorträgers fixiert, so dass pro Statorsegment drei oder vier Fixationspunkte vorgesehen sind, an denen eine Fixierung von Statorsegment mit Statorträger erfolgt.

Prinzipiell wird nunmehr die Position der Bohrung am Statorsegment parallel zur Winkelhalbierenden eines Statorsegments verschoben, um damit letztendlich das komplette Statorsegment radial zu verschieben. Dies gelingt insbesondere durch ein Zwischenstück, das formgenau zu einer dafür vorgesehenen Ausnehmung im Flanschträger des Statorsegments ist. Diese Zwischenstücke weisen eine außermittig angeordnete Bohrung auf. Die Ausnehmung im Flanschträger muss exakt gearbeitet sein, um das ebenfalls exakt bearbeitete Zwischenstück aufnehmen zu können, dass nunmehr genau die Position des Fixationspunktes des Statorträgers am und zum Statorsegment festlegt. Es ist also eine exakte Bearbeitung der Kontur der Ausnehmung am Statorsegment, als auch der dazu korrespondierenden Außenkontur des Zwischenstücks notwendig, die kongruent sind.

Dazu eignen sich Zwischenstücke mit rechteckförmiger, quadratischer, runder, rautenförmiger oder achteckiger Grundform

Das Zwischenstück und damit auch die Kontur der Ausnehmung im Statorsegment ist punktsymmetrisch bzgl. des Schwerpunkts, so dass eine Drehung des Zwischenstücks um den Schwerpunkt zu einer anderen Position der Bohrung auf dem Zwischenstück und damit der Bohrung am Statorträger herbeiführt.

Damit reduziert sich letztlich der gesamte Aufwand, um einen exakten und ggf. einfach einstellbaren Luftspalt zu erhalten.

Die Position der Bohrung auf dem Zwischenstück ist somit außermittig. Durch Drehen des Zwischenstücks um eine waagrecht verlaufende Symmetrieachse (bezogen auf die Außenkontur) des Zwischenstücks kann die Position des Statorsegments am Statorträger um den Versatz des Bohrungsmittelpunktes bezogen auf den Mittelpunkt des Zwischenstücks angehoben bzw. abgesenkt werden.

Des Weiteren sind nunmehr bei dem Montageprozess mehrere derartige an die Kontur der Ausnehmung angepasste Zwischenstücke mit unterschiedlich angeordneten Bohrungen vorhanden, aus denen gewählt wird, um eine exakte Positionierung des Statorsegments am Statorträger vornehmen zu können.

Die Erfindung sowie weitere vorteilhafte Ausgestaltungen der Erfindung werden anhand prinzipiell dargestellter Ausführungsbeispielen näher erläutert. Darin zeigen:
- FIG 1: eine prinzipielle Windkraftanlage,
- FIG 2: einen Ausschnitt eines Statorsegments an einem Statorträger,
- FIG 3: ein Statorsegment,
- FIG 4: eine prinzipiell dargestellte Herstellungsweise eines Stators,
- FIG 5: ein weiteres Statorsegment mit Flansch,
- FIG 6: einen Fixationspunkt,
- FIG 7: einen Längsschnitt des Fixationspunkt,
- FIG 8: ein rechteckförmiges Zwischenstück,
- FIG 9: ein quadratisches Zwischenstück
- FIG 10: ein weiteres rechteckförmiges Zwischenstück,
- FIG 11: ein rautenförmiges Zwischenstück,
- FIG 12: ein trapezförmiges Zwischenstück,
- FIG 13: ein dreieckförmiges Zwischenstück,
- FIG 14: ein achteckiges Zwischenstück,
- FIG 15: ein rundes Zwischenstück.

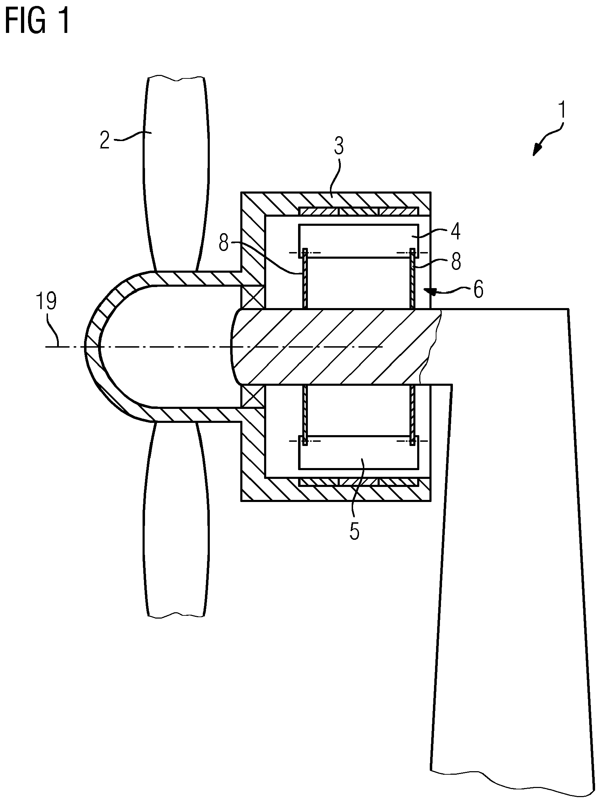

FIG 1 zeigt eine prinzipielle Darstellung eines direkt angetriebenen Windkraftgenerators mit einem Außenläufer. Der Rotor 3 weist dabei nicht näher dargestellte Permanentmagnete auf, die mit einem in dieser Darstellung nicht näher dargestellten Wicklungssystem eines Stators 4 elektromagnetisch wechselwirken und somit aufgrund der Rotation der Windturbine der Windkraftanlage 1 elektrische Energie bereitstellen. Der Stator 4 ist in Umfangsrichtung betrachtet in Statorsegmente 5 aufgeteilt, die sich jeweils an Flanschen 8 eines Statorträgers 6 abstützen, der in dieser Ausführung zwei parallel verlaufende Flansche 8 aufweist.

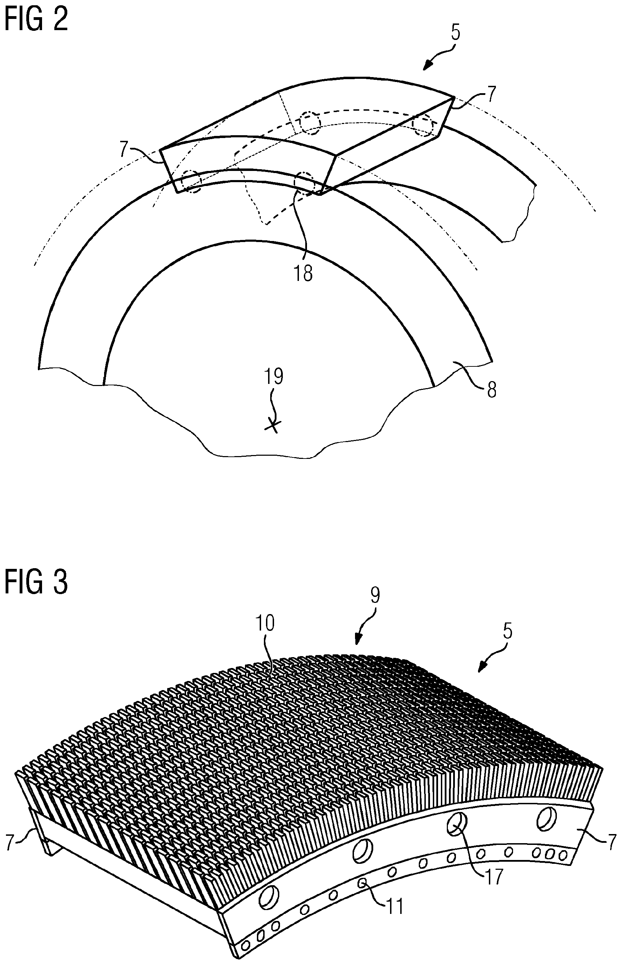

Wie FIG 2 näher darstellt, ist ein Statorsegment 5 mit in dieser Darstellung vier Fixationspunkten 18 durch eine geeignete Fixiervorrichtung, wie sie noch näher beschrieben wird, an den Flanschen 8 des Statorträgers 6 befestigt.

Ein Statorsegment 5 weist ein Blechpaket 9 auf, das achsparallel verlaufende Nuten 10 aufweist, in denen ein nicht näher dargestelltes Wicklungssystem angeordnet und fixiert ist. Dieses Blechpaket 9 wird durch Segmentträger 7 axial begrenzt und zusammengehalten. Über die Segmentträger 7, die an ihrem radial inneren Bereich Ausnehmungen 11 aufweisen, wird nunmehr ein Statorsegment 5 am Statorträger 6 bzw. den Flanschen 8 befestigt.

FIG 3 zeigt in einer perspektivischen Darstellung ein Statorsegment 5 ohne Wicklungssystem mit Segmentträgern 7, die mit mehreren Ausnehmungen 11 versehen sind. Die Segmentträger 7 paketieren und fixieren das Blechpaket 9 des Statorsegments 5. Weitere größeren Ausnehmungen bzw. Durchbrüche 17 im Segmentträger 7 gestatten im Betrieb der Windkraftanlage 1 den Durchtritt von Kühlluft, um den Stator 4 zu kühlen.

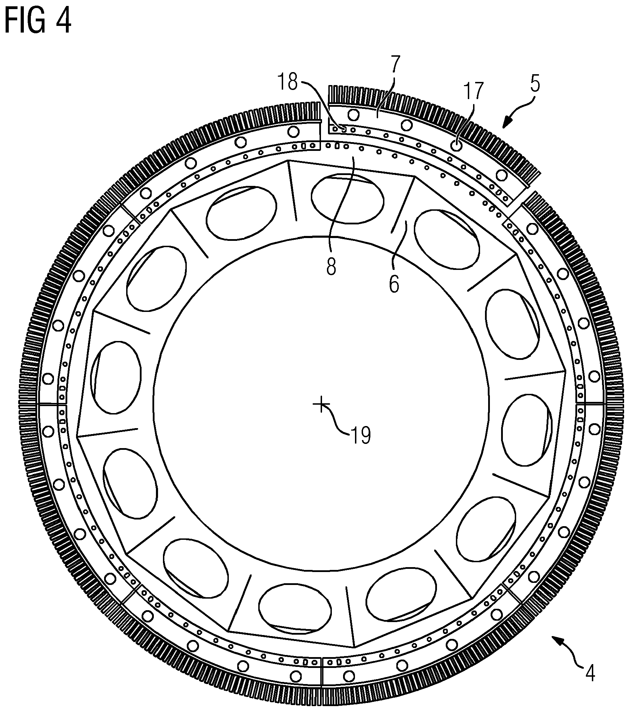

FIG 4 zeigt prinzipiell, wie die Statorsegmente 5 an einem Statorträger 6 mittels Verbindungen von Flansch des Statorträgers 6 und Flansch 8 des Statorsegments 5 zueinander fixiert und ausgerichtet werden. Aus Gründen der zeichnerischen Übersichtlichkeit wurde auf das Wicklungssystem in den Nuten verzichtet. Die Statorsegmente 5 werden vorzugsweise radial auf den Statorträger 6 gesetzt, anschließend ausgerichtet und über die Fixationspunkte 18 mittels Fixationsvorrichtungen fixiert.

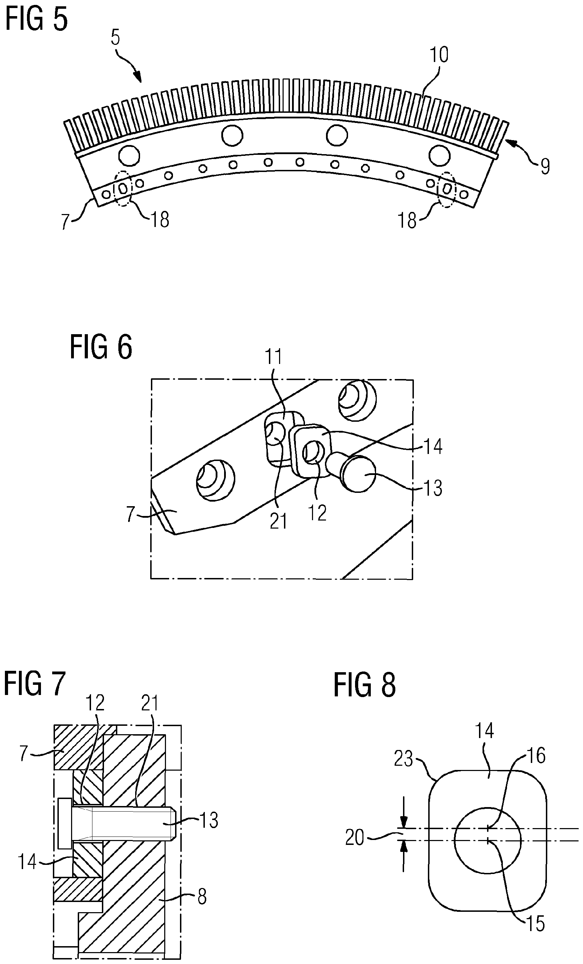

FIG 5 zeigt in einer Seitendarstellung eine genauere Ansicht eines Statorsegments 5, das ein Blechpaket 9 zeigt, mit noch nicht durch das Wicklungssystem belegten Nuten 10. Des Weiteren zeigt FIG 5 die radial nach innen weisenden Abschnitte des Segmentträgers 7, über die das Statorsegment 5 am Statorträger 6 an den vorgegebenen Fixationspunkten 18 fixiert wird.

FIG 6 zeigt in einer Detaildarstellung einen Fixationspunkt 18, wobei die Fixiervorrichtung mehrere Teile aufweist. Zum einen die Ausnehmung 11 des Segmentträgers 7, die bzgl. der Kontur mit engsten Toleranzen hergestellt wurde und in die ein passgenaues Zwischenstück 14 einsetzbar ist, das ebenso exakt auf Form gearbeitet sein muss. Das Zwischenstück 14 weist einen außermittig angeordneten Mittelpunkt einer Bohrung auf, so dass durch Drehen dieses Zwischenstücks 14 in einer Ebene parallel zu den Flanschen 8 ermöglicht wird, das Statorsegment 5 in der Ebene des Flansches 8 zu verschieben.

Das Zwischenstück 14, wie in FIG 8 näher dargestellt, weist eine Bohrung 23 auf, deren Mittelpunkt 15 bzgl. der Mitte 16 des Zwischenstücks 14 einen Versatz 20 aufweist.

Mittels einer Montagehilfsvorrichtung der Statorsegmente 5 wird dabei das Statorsegment 5 angehoben oder abgesenkt und das Zwischenstück 14 mittels des Passstiftes 13 positionsgenau fixiert. Durch Drehung des Zwischenstücks 14 um 180° um die Mitte 16 kann der Segmentträger 7 an einem Fixationspunkt 18 radial versetzt positioniert werden.

Durch Auswahl aus mehreren konturmäßig gleichen Zwischenstücken 14 mit unterschiedlichem Versatz 20 an einem Fixationspunkt kann der Segmentträger 7 radial genau positioniert werden und damit der Luftspalt eines Windkraftgenerators exakt eingestellt werden. Ebenso wird an den anderen Fixationspunkten 18 dieses Segmenträgers 7 verfahren.

Gemäß den obigen Schritten wird nunmehr bei den anderen Fixationspunkten 18 der weiteren Statorsegmente 5 verfahren. Dabei wird, z.B. wie in FIG 7 dargestellt, das Zwischenstück 14 durch eine nicht näher dargestellte Montagevorrichtung derartig ausgerichtet, dass eine axiale Flucht der Bohrung 12 des Zwischenstücks 14 und der Bohrung 21 im Flansch 8 des Statorträgers 6 erfolgt. Ein Passstift 13 weist ein leichtes Übermaß gegenüber der Bohrung 12 des Zwischenstücks 14 und der Bohrung 21 des Flansches 8 auf, so dass eine exakte Positionierung und Ausrichtung mittels der Montagevorrichtung und damit ein exakter Luftspalt eingestellt und mittels der Fixiervorrichtung positionsgenau fixiert werden kann.

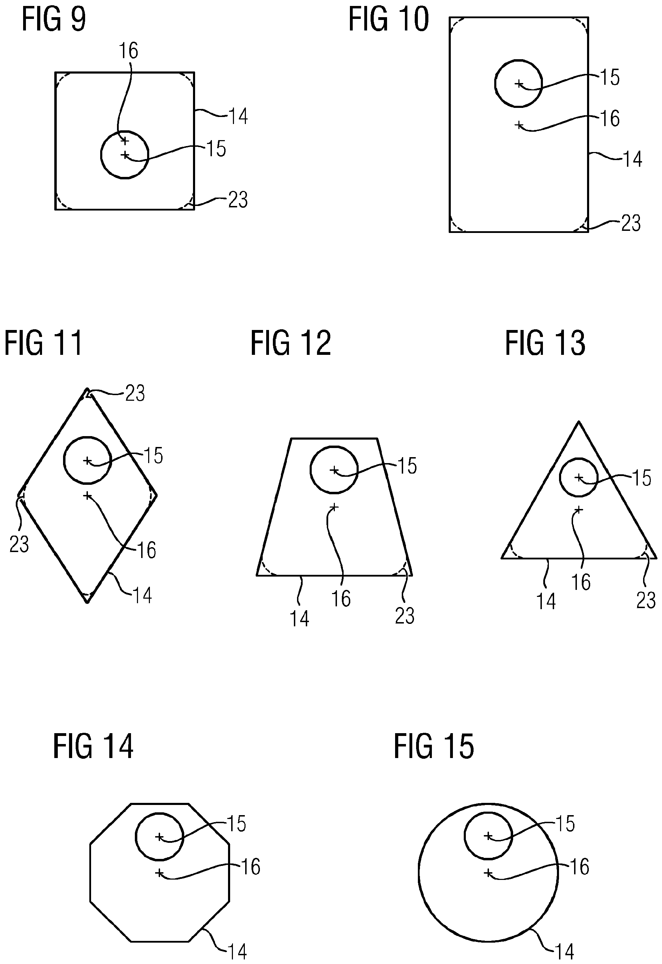

FIG 9 bis FIG 15 zeigen weitere Zwischenstücke 14, die mit ihrer jeweiligen Kontur im Segmentträger 7 im Wesentlichen korrespondieren müssen, um den Segmenträger 7 und damit das Statorsegment exakt zu positionieren. Durch jeweiliges Drehen der Zwischenstücke 14 um 180° um die Mitte 16 ist bei den jeweiligen Zwischenstücken 14 bereits eine Varianz bei der Montage möglich. Rundungen 23 der Eckpunkte der jeweiligen Zwischenstücke 14 beeinträchtigen dabei die Positionierung nicht.

Der Versatz 20 zwischen Mittelpunkt 15 und der Mitte 16 des Zwischenstücks 14 ist in den Figuren 9 bis 15 teilweise übertrieben dargestellt. Der Versatz 20, wie auch in FIG 8 dargestellt, bewegt sich im Bereich von 0,1mm bis einige Millimeter.

Der erfinderische Gedanke lässt sich auch bei einem Statorträger 6 mit nur einem Flansch umsetzen. Dabei weist dann das Statorsegment 5 nur einen im Wesentlichen, bezogen auf das Statorsegment 5, mittig angeordneten Segmentträger auf.

## Patentansprüche

1. Stator (4) eines direktangetriebenen Windkraftgenerators mit in Umfangsrichtung betrachtet angeordneten Statorsegmenten (5), die jeweils insbesondere an zwei parallel verlaufend angeordneten Flanschen (8) eines gemeinsamen Statorträgers (6) positioniert sind, wobei jedes Statorsegment (5) über Fixationsvorrichtungen mit den Flanschen (8) fixiert ist, wobei die Fixationsvorrichtungen jeweils ein Zwischenstück (14), eine dazu passende Ausnehmung (11) am Segmentträger (7) des Statorsegments (5) und einen Passstift (13) aufweisen.

2. Stator (4) nach Anspruch 1, **dadurch gekennzeichnet, dass** die Fixationsvorrichtung an den äußeren Bereich des Statorsegments (5) vorgesehen ist.

3. Stator (4) nach Anspruch 1 oder 2, **dadurch gekennzeichnet, dass** die Fixationsvorrichtungen achsparallele Passstifte (13) aufweisen.

4. Stator (4) nach einem der vorhergehenden Ansprüche,
**dadurch gekennzeichnet, dass** die Passstifte (13) bezüglich einer im Flansch (8) des Statorträgers (6) vorhandenen Öffnung (21) ein Übermaß aufweisen.

5. Verfahren zur Positionierung und Fixierung von Statorsegmenten (5) eines Stators (4) eines direkt angetriebenen Windkraftgenerators mittels mehrerer Fixationspunkte (18) zur Erzielung eines gleichmäßigen Luftspalts zwischen dem Stator (4) und einem Rotor (6) durch folgende Schritte:
- Ansetzen eines Statorsegments (5) an einen Statorträger (6) mittels Montagevorrichtung,
- Justieren des Statorsegments (5) am Statorträger (6) und Einsetzen eines geeigneten Zwischenstücks (14) in eine Ausnehmung (11) des Segmentträgers (7) des Statorsegments (5), wobei Zwischenstück (14) und Ausnehmung (11) passgenau ausgeführt sind,
- Einsetzen eines Passstiftes (13) in die Bohrung (12) des Zwischenstücks (14) und einer Öffnung (21) im Flansch (8) des Statorträgers (6), so dass durch Einsetzen des Passstiftes (13) in die axial fluchtende Bohrungen (12) des Zwischenstücks (14) und der Öffnung (21) im Flansch (8) eine radiale Positionierung und Fixierung des Statorelements (5) am Flansch (8) des Statorträgers (6) erfolgt,
- wiederholen dieser Schritte an weiteren Fixationspunkten (18) des Statorsegments (5) und weiterer Statorsegmente (5) bis die erforderliche Position eingenommen, fixiert und der Luftspalt eingestellt ist.
